# EUROPÄISCHE PATENTSCHRIFT

(11) **EP 1 693 576 B1**
(45) Veröffentlichungstag und Bekanntmachung des Hinweises auf die Patenterteilung: **09.04.2008**
(21) Anmeldenummer: 06000656.6
(22) Anmeldetag: 13.01.2006
(51) Int. Cl.: F16B 19/00

(54) **Steckdübel**
Push-in plug
Cheville

(30) Priorität: 17.02.2005 DE 102005007236
(43) Veröffentlichungstag der Anmeldung: 23.08.2006
(73) Patentinhaber: fischerwerke GmbH & Co. KG, 72178 Waldachtal (DE)
(72) Erfinder: Nehl, Wolfgang, 72178 Waldachtal (DE)
(74) Vertreter: Suchy, Ulrich Johannes

(56) Entgegenhaltungen:
- DE-A1- 10 324 004
- DE-A1- 19 628 557

## Beschreibung

Die Erfindung betrifft einen Steckdübel entsprechend dem ersten Teil des Anspruchs 1 (DE 196 28 557 A).

Steckdübel werden vielfach aus Kunststoff hergestellt und werden üblicherweise für leichtere Befestigungen wie beispielsweise die Befestigung von Kabeln oder leichter Gegenstände verwendet. Im Vergleich mit Spreizdübeln, die durch Eindrehen einer Spreizschraube verspreizt und verankert werden, haben Steckdübel den Vorteil, dass sie nur in ein Bohrloch gesteckt oder auch mit einem Hammer eingetrieben werden und selbstklemmend im Bohrloch halten. Das Eindrehen einer Schraube entfällt.

Aus der DE 197 56 764 A1 ist ein Steckdübel bekannt, der einen flachen, leistenförmigen Schaft mit in Längsrichtung hintereinander angeordneten Schrägflächen auf einander gegenüberliegenden Seiten des Schafts aufweist. Den Schrägflächen sind zylinderförmige Spreizkörper zugeordnet, die auf den Schrägflächen gleiten oder wälzen. Wird auf den in einem Bohrloch befindlichen, bekannten Steckdübel eine Zugkraft ausgeübt, die in Richtung aus dem Bohrloch heraus wirkt, drücken die Schrägflächen am Schaft des Steckdübels die Klemmkörper, die an einer Bohrlochwand rückgehalten werden, vom Schaft weg nach außen gegen die Bohrlochwand. Die mit den Schrägflächen des Schafts des Steckdübels zusammenwirkenden Klemmkörper verkeilen den Steckdübel im Bohrloch. Die Schrägflächen steigen in einer Einsteckrichtung des Steckdübels in das Bohrloch schräg nach außen an. Bei diesem bekannten Steckdübel sind Anlageflächen der Klemmkörper an der Bohrlochwand aufgrund der Zylinderform der Klemmkörper klein, auch wenn die Klemmkörper in Umfangsrichtung eine einem Radius des Bohrlochs entsprechende Rundung aufweisen.

Ein weiterer Steckdübel ist bekannt aus der DE 93 05 667 U1. Der Schaft dieses Steckdübels ist in Längsrichtung zweigeteilt, wobei eine Hälfte des Schafts einen Klemmkörper bildet. Eine Trennfläche zwischen den Schafthälften weist einen sägezahnförmigen Verlauf auf, wodurch Schrägflächen ausgebildet sind, die den Schaft mit dem Klemmkörper in einem Bohrloch verkeilen, wenn eine Zugkraft in Richtung aus dem Bohrloch heraus auf den Steckdübel ausgeübt wird.

Aufgabe der Erfindung ist, einen Steckdübel der eingangs erläuterten Art vorzuschlagen, der eine hohe Verankerungskraft in einem Bohrloch aufweist.

Diese Aufgabe wird erfindungsgemäß durch die Merkmale des Anspruchs 1 gelöst. Beim erfindungsgemäßen Steckdübel sind die in Längsrichtung des Steckdübels hintereinander angeordneten Klemmkörper in Längsrichtung des Steckdübels beweglich. Sind sie auch gegeneinander beweglich ist dadurch eine unterschiedlich große Längsverschiebung der Klemmkörper und damit auch eine unterschiedlich große Aufspreizung möglich. Mit unterschiedlich großer Aufspreizung ist gemeint, dass die Klemmkörper unterschiedlich weit vom Schaft weg nach außen gedrückt werden. Die Klemmkörper passen sich dadurch individuell an Unregelmäßigkeiten des Bohrlochs an, wodurch die Verankerungskraft des Steckdübels erhöht ist. Die Klemmkörper können jedoch auch starr miteinander verbunden sein, also beispielsweise je ein Satz sich gegenüberliegender Klemmkörper einstückig ausgeführt sein.

Des weiteren sind die Klemmkörper des erfindungsgemäßen Steckdübels an ihren Umfangsenden beweglich mit dem Schaft des Steckdübels verbunden. Mit Umfangsenden sind in Umfangsrichtung des Steckdübels weisende Enden der sich in Längsrichtung und in Umfangsrichtung des Steckdübels erstreckenden Klemmkörper gemeint. Die Klemmkörper können in Umfangsrichtung gewölbt oder auch gerade in Sekantenrichtung ausgebildet sein, wobei auch letzteres eine Erstreckung in Umfangsrichtung des Steckdübels bedeutet. Durch die Verbindung der Klemmkörper an ihren Umfangsenden mit dem Schaft des Spreizdübels nehmen die Verbindungen keinen Platz in Längsrichtung zwischen den Klemmkörpern ein sondern lassen sich platzsparend an den Umfangsenden der Klemmkörper unterbringen. Der in Längsrichtung zwischen den Klemmkörpern nicht durch die Verbindungen der Klemmkörper mit dem Schaft des Steckdübels eingenommene Raum steht für die Klemmkörper zur Verfügung, die dadurch in Längsrichtung des Steckdübels größer ausgebildet werden können. Dadurch lässt sich eine Anlagefläche der Klemmkörper an einer Bohrlochwandung vergrößern, wodurch die Verankerungskraft des Steckdübels erhöht ist.

Eine Ausgestaltung der Erfindung sieht seil- oder bandförmige Materialstreifen zur beweglichen Verbindung der Klemmkörper mit dem Schaft des Steckdübels vor. Allerdings müssen die Klemmkörper nicht unbedingt aus demselben Material wie der Schaft bestehen. Bei einer Herstellung des Steckdübels aus Kunststoff lassen sich die seil-oder bandförmigen Materialstreifen in einem Arbeitsgang mit den Klemmkörpern und/oder dem Schaft des Steckdübels herstellen.

Eine Ausgestaltung der Erfindung sieht vor, dass ein Abstand der Klemmkörper voneinander in Längsrichtung des Steckdübels nicht größer als eine Erstreckung der Klemmkörper in Längsrichtung des Steckdübels ist. Eine Weiterbildung der Erfindung sieht ein Verhältnis von etwa 0,5-0,6 des Abstands der Klemmkörper voneinander in Längsrichtung des Steckdübels zur Erstreckung der Klemmkörper in Längsrichtung des Steckdübels vor. Diese Ausgestaltung der Erfindung ergibt eine verhältnismäßig große Erstreckung der Klemmkörper in Längsrichtung des Steckdübels und gewährleistet damit eine große Anlagefläche der Klemmkörper an einer Bohrlochwandung. Trotzdem ist eine ausreichende Beweglichkeit der Klemmkörper gegeneinander in Längsrichtung des Steckdübels gewährleistet, um beispielsweise Unregelmäßigkeiten des Bohrlochs auszugleichen.

Um eine gute und insbesondere großflächige Anlage der Klemmkörper an einer Bohrlochwandung zu erreichen sieht eine Ausgestaltung der Erfindung zylinderförmige Außenflächen der Klemmkörper vor.

Eine Ausgestaltung der Erfindung sieht vor, dass die Schrägflächen, über die sich die Klemmkörper am Schaft des Steckdübels abstützen, in Querrichtung des Steckdübels ballig sind. Die Schrägflächen können wie bereits erwähnt am Schaft und/oder an den Klemmkörpern ausgebildet sein. Die in Querrichtung des Steckdübels ballige Ausbildung der Schrägflächen bewirkt eine Führung der Klemmkörper in Längsrichtung des Steckdübels. Weiterer Vorteil der in Querrichtung des Steckdübels balligen Schrägflächen ist eine vergrößerte Anlagefläche der Klemmkörper an den Schrägflächen des Schafts jedenfalls dann, wenn die Schrägflächen am Schaft und an den Klemmkörpern ausgebildet sind. Eine Flächenpressung der Klemmkörper an den Schrägflächen des Schafts ist dadurch verringert und ihr Gleitvermögen verbessert.

Die Erfindung sieht eine einstückige Ausbildung der Klemmkörper mit dem Steckdübel vor. Der Steckdübel wird beispielsweise durch Spritzgießen aus Kunststoff hergestellt, wobei der Steckdübel in einem Arbeitsgang zusammen mit den Klemmkörpern gespritzt wird, die über die beispielsweise seil- oder bandförmigen Materialstreifen mit dem Steckdübel verbunden sind. Der Steckdübel ist dadurch einfach und preisgünstig herstellbar.

Die Erfindung wird nachfolgend anhand in der Zeichnung dargestellter Ausführungsbeispiele näher erläutert. Es zeigen:
- Figur 1: ein erstes Ausführungsbeispiel eines erfindungsgemäßen Steckdübels in perspektivischer Darstellung;
- Figur 2: den Steckdübel aus Figur 1 nach seiner Herstellung durch Spritzgießen;
- Figur 3: einen vergrößerten Achsschnitt eines vorderen Bereichs des Steckdübels aus Figur 1;
- Figur 4: den Steckdübel aus Figur 3 wie in einem Bohrloch befindlich;
- Figur 5: ein zweites Ausführungsbeispiel eines erfindungsgemäßen Steckdübels; und
- Figur 6: den Steckdübel aus Figur 5 wie in einem Bohrloch befindlich.

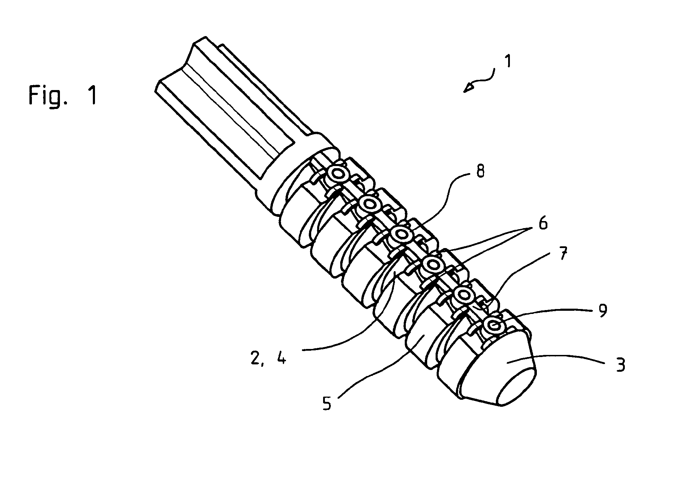

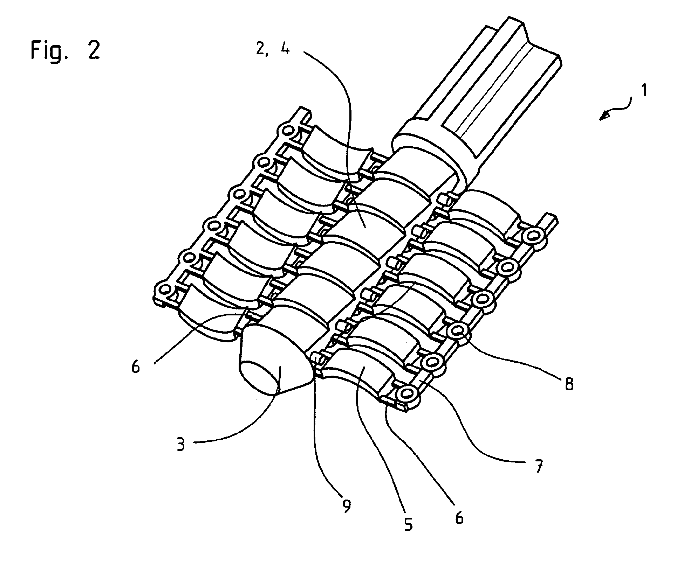

Der in Figuren 1 und 2 dargestellte, erfindungsgemäße Steckdübel 1 weist einen Schaft 2 auf, der in Figur 2 gut zu sehen ist. Der Schaft 2 weist eine Tannenbaumprofilierung auf, durch die in Richtung eines in Einsteckrichtung vorderen Endes 3 des Steckdübels 1 ansteigende Schrägflächen 4 gebildet sind. Im Bereich der Tannenbaumprofilierung weist der Schaft 2 keinen kreisrunden, sondern einen dem gegenüber abgeflachten, d.h. linsenförmigen Querschnitt auf. In Umfangs- oder Querrichtung des Steckdübels 1 sind die Schrägflächen 4 ballig gewölbt.

Auf den Schrägflächen 4 sind in dem in Figur 1 dargestellten gebrauchsfertigen Zustand des Steckdübels 1 Klemmkörper 5 angeordnet, die sich in dem in Figur 2 dargestellten Zustand nach Entformung des Steckdübels 1 aus einem nicht dargestellten Spritzgießwerkzeug noch seitlich neben dem Schaft 2 befinden. Es sind Klemmkörper 5 in Längsrichtung des Steckdübels 1 hintereinander angeordnet, wobei die Klemmkörper 5 in Längsrichtung des Steckdübels 1 kürzer als die Schrägflächen 4 sind, so dass die Klemmkörper 5 einen Abstand in Längsrichtung des Steckdübels 1 voneinander aufweisen. Die Klemmkörper 5 sind dadurch in Längsrichtung des Steckdübels 1 gegeneinander beweglich.

In den in Figur 1 dargestellten gebrauchsfertigen Zustand des Steckdübels 1 sind Klemmkörper 5 einander paarweise gegenüber angeordnet. Diese Ausgestaltung ist wegen der Herstellbarkeit des Steckdübels 1 aus Kunststoff zwar bevorzugt, allerdings nicht zwingend. Es können auch mehr als zwei Klemmkörper 5 über den Umfang des Schafts 2 verteilt angeordnet sein, grundsätzlich ist auch eine Ausgestaltung des Steckdübels 1 mit Klemmkörpern 5 nur auf einer Seite des Schafts 2 denkbar (nicht dargestellt).

Die Klemmkörper 5 weisen im dargestellten und beschriebenen Ausführungsbeispiel der Erfindung eine Zylinderschalenform auf, insbesondere sind ihre Außenflächen zylinderförmig mit einem Radius, der der Hälfte eines Nenndurchmessers des Steckdübels 1 und damit der Hälfte eines vorgesehenen Durchmessers eines nicht dargestellten Bohrlochs entspricht, in dem der Steckdübel 1 verankert werden soll. In verankertem Zustand liegen die Klemmkörper 5 dadurch mit ihren Außenflächen vollflächig an einer Bohrlochwandung an (nicht dargestellt).

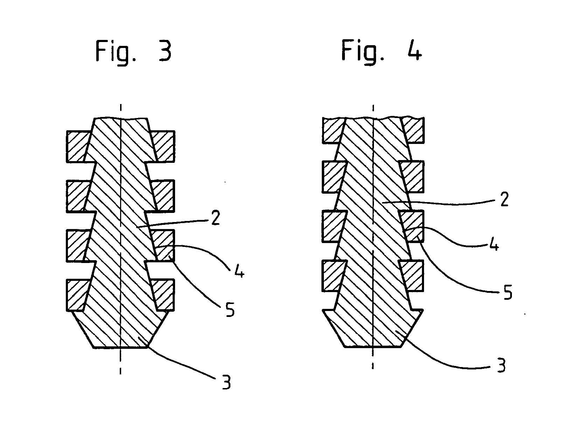

In einem gedachten Längsschnitt des Steckdübels 1 weisen die Klemmkörper 5 eine keilförmige Schnittfläche auf, wie es in Figuren 3 und 4 erkennbar ist. Innenflächen und Außenflächen der Klemmkörper 5 stehen in einem Winkel zueinander, der eine Schräge der Schrägflächen 4 des Schafts 2 des Steckdübels 1 ausgleicht. Die Außenflächen der Klemmkörper 5 sind dadurch parallel zur Längsrichtung des Steckdübels 1.

An ihren Umfangsenden sind die Klemmkörper 5 über bandförmige Materialstreifen 6 einstückig mit dem Schaft 2 des Steckdübels 1 verbunden. Die Materialstreifen 6 sind verformbar, die Klemmkörper 5 sind dadurch beweglich mit dem Schaft 2 verbunden. Umfangsenden der Klemmkörper 5, die nach dem Spritzgießen in dem in Figur 2 dargestellten Zustand des Steckdübels 1 dem Schaft 2 abgewandt sind, sind über die Materialstreifen 6 mit einem in Längsrichtung verlaufenden Steg 7 verbunden. Der Steg 7 weist Augen 8 auf, die auf seitlich vom Schaft abstehende Zapfen 9 clipsbar sind. Nach dem Spritzgießen werden die sich seitlich des Schafts 2 befindlichen Klemmkörper 5 um 180° auf die Schrägflächen 4 des Schafts 2 umgelegt und die beiden Stege 7 werden mit den Augen 8 auf die Zapfen 9 geclipst. Der Steckdübel 1 gelangt dadurch in seinen in Figur 1 dargestellten gebrauchsfertigen Zustand. Da sich die Materialstreifen 6, die die Klemmkörper 5 beweglich mit dem Schaft 2 des Steckdübels 1 verbinden, an den Umfangsenden der Klemmkörper 5 und nicht zwischen den in Längsrichtung des Steckdübels 1 hintereinander angeordneten Klemmkörpern 5 befinden, schränken die Materialstreifen 6 die Beweglichkeit der Klemmkörper 5 in Längsrichtung des Steckdübels 1, insbesondere die Beweglichkeit der Klemmkörper 5 gegeneinander, nicht ein.

Im gebrauchsfertigen, in Figur 1 dargestellten Zustand des Steckdübels 1, der im Längsschnitt und vergrößert auch in Figur 3 dargestellt ist, weisen die Klemmkörper 5 ein Übermaß auf, d.h. sie stehen seitlich über den Steckdübel 1 vor. Wird der Steckdübel 1 in ein nicht dargestelltes Bohrloch eingebracht, drückt es die Klemmkörper 5 auf den Schrägflächen 4 des Schafts 2 des Steckdübels 1 nach hinten, d.h. von dem in Einsteckrichtung des Steckdübels 1 vorderen Ende 3 weg und nach innen, wie es in Figur 4 dargestellt ist. Wird eine Zugkraft auf den Steckdübel 1 ausgeübt, die aus dem Bohrloch heraus gerichtet ist, drücken die Schrägflächen 4 die Klemmkörper 5 nach außen gegen eine Bohrlochwandung und verkeilen den Steckdübel 1 im Bohrloch. Der Steckdübel 1 ist dadurch im Bohrloch verankert. Aufgrund der Form und Anordnung der Klemmkörper 5 weisen die Klemmkörper 5 eine große Anlagefläche an der Bohrlochwandung auf. Durch ihre Einzelbeweglichkeit in Längsrichtung des Steckdübels 1 können sich die Klemmkörper 5 unterschiedlich weit in Längsrichtung in Bezug auf den Steckdübel 1 verschieben und dadurch an Durchmesserunregelmäßigkeiten des Bohrlochs anpassen. Beides sorgt für eine hohe Verankerungskraft des Steckdübels 1 im Bohrloch.

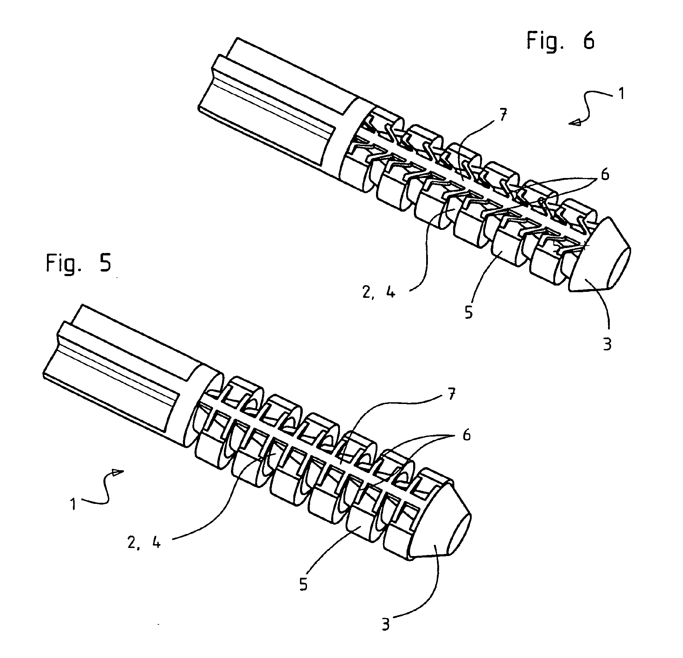

Im Unterschied zu dem vorstehend anhand Figuren 1-4 erläuterten Steckdübel 1 ist bei dem in Figuren 5 und 6 gezeigten, erfindungsgemäßen Steckdübel 1 der Schaft mit den Klemmkörpern 5 umspritzt. Zur Herstellung des in Figuren 5 und 6 dargestellten Steckdübels 1 wird also zunächst dessen den Schaft 2 mit den Schrägflächen 4 aufweisender Grundkörper hergestellt. Der Grundkörper kann aus Kunststoff gespritzt sein. Denkbar ist auch eine Herstellung aus Metall. Anschließend wird der Grundkörper als Kern in ein nicht dargestelltes Spritzgießwerkzeug eingelegt und mit den Klemmkörpern 5 umspritzt. Die Klemmkörper 5 sind mit den bandförmigen Materialstreifen 6 beweglich mit den Längsstegen 7 verbunden, die sich seitlich des Schafts 2 befinden. Mit den Materialstreifen 6 umschließen die Klemmkörper 5 den Schaft 2 des Steckdübels 1 und sind dadurch beweglich, wenn auch nicht einstückig mit dem Schaft 2 des Steckdübels 1 verbunden. Zum Umspritzen des Schafts 2 mit den Klemmkörpern 5 besteht der Schaft 2 vorzugsweise aus einem Material mit höherer Schmelztemperatur als die Klemmkörper 5. Im übrigen ist der in Figuren 5 und 6 dargestellte Steckdübel 1 gleich ausgebildet und funktioniert in gleicher Weise wie der oben anhand Figuren 1-4 erläuterte Steckdübel 1. Zur Vermeidung von Wiederholungen wird zur Erläuterung von Figuren 5 und 6 auf die Erläuterungen der Figuren 1-4 verwiesen. Gleiche Bauteile haben gleiche Bezugszahlen. Eine Clipsverbindungsmöglichkeit der Längsstege 7 mit dem Schaft 2 ist bei dem in Figuren 4 und 6 dargestellten Steckdübel 1 nicht erforderlich. Figur 5 zeigt den Steckdübel 1 in gebrauchsfertigem Zustand, Figur 6 zeigt den Steckdübel 1 mit von einer Bohrlochwandung nach innen und hinten gedrückten Klemmkörpern 5, d.h. in verankertem Zustand, jedoch ohne das Bohrloch.

Die Verformung der bandförmigen Materialstreifen 6, die die Klemmkörper 5 mit den Längsstegen 7 bzw. dem Schaft 2 des Steckdübels 1 verbinden, ist in Figur 6 zu sehen.

## Patentansprüche

1. Steckdübel, mit einem in ein Bohrloch einzuführenden, sich in Längsrichtung des Steckdübels erstreckenden Schaft (2) und mit Klemmkörpern (5), die in Längsrichtung des Steckdübels (1) hintereinander angeordnet sind, die in Längsrichtung des Steckdübels (1) beweglich sind und die sich über in Einsteckrichtung des Steckdübels (1) gegenüber der Längsachse radial ansteigende Schrägflächen (5) am Schaft (2) des Steckdübels (1) abstützen, wobei der Schaft und die Klemmkörper einstückig miteinander verbunden sind, **dadurch gekennzeichnet, dass** die Klemmkörper (5) an in Umfangsrichtung des Steckdübles weisenden Enden der Klemmkörper beweglich mit dem Schaft (2) des Steckdübels (1) verbunden sind.

2. Steckdübel nach Anspruch 1, **dadurch gekennzeichnet, dass** die Klemmkörper (5) über seil- oder bandförmige Materialstreifen (6) mit dem Schaft (2) des Steckdübels (1) verbunden sind.

3. Steckdübel nach Anspruch 1, **dadurch gekennzeichnet, dass** ein Abstand der Klemmkörper (5) voneinander in Längsrichtung des Steckdübels (1) nicht größer als ihre Erstreckung in Längsrichtung des Steckdübels (1) ist.

4. Steckdübel nach Anspruch 3, **dadurch gekennzeichnet, dass** ein Abstand der Klemmkörper (5) voneinander in Längsrichtung des Steckdübels (1) etwa das 0,5- bis 0,6-fache ihrer Erstreckung in Längsrichtung des Steckdübels (1) beträgt.

5. Steckdübel nach Anspruch 1, **dadurch gekennzeichnet, dass** die Klemmkörper (5) zylinderförmige Außenflächen aufweisen.

6. Steckdübel nach Anspruch 1, **dadurch gekennzeichnet, dass** die Schrägflächen (4), über die sich die Klemmkörper (5) am Schaft (2) des Steckdübels (1) abstützen, in Querrichtung des Steckdübels (1) ballig sind.

## Claims

1. Push-in fixing plug, having a shank (2) extending in the longitudinal direction of the push-in fixing plug, which shank is to be introduced into a drilled hole, and having clamping bodies (5) which are arranged one behind the other in the longitudinal direction of the push-in fixing plug (1), which are movable in the longitudinal direction of the push-in fixing plug (1) and which are supported on the shank (2) of the push-in fixing plug (1) by means of inclined faces (4) rising radially relative to the longitudinal axis in the direction of insertion of the push-in fixing plug (1), the shank and the clamping bodies being integrally joined to one another, **characterized in that** the clamping bodies (5) are movably joined to the shank (2) of the push-in fixing plug (1) at ends of the clamping bodies pointing in the circumferential direction of the push-in fixing plug.

2. Push-in fixing plug according to claim 1, **characterized in that** the clamping bodies (5) are joined to the shank (2) of the push-in fixing plug (1) by means of rope-shaped or ribbon-shaped material strips (6).

3. Push-in fixing plug according to claim 1, **characterized in that** the spacing of the clamping bodies (5) from one another in the longitudinal direction of the push-in fixing plug (1) is not greater than their extent in the longitudinal direction of the push-in fixing plug (1).

4. Push-in fixing plug according to claim 3, **characterized in that** the spacing of the clamping bodies (5) from one another in the longitudinal direction of the push-in fixing plug (1) is approximately from 0.5 to 0.6 times their extent in the longitudinal direction of the push-in fixing plug (1).

5. Push-in fixing plug according to claim 1, **characterized in that** the clamping bodies (5) have cylindrical outer faces.

6. Push-in fixing plug according to claim 1, **characterized in that** the inclined faces (4) by means of which the clamping bodies (5) are supported on the shank (2) of the push-in fixing plug (1) are convex in the transverse direction of the push-in fixing plug (1).

## Revendications

1. Cheville enfichable, comportant une tige (2) destinée à être introduite dans un trou foré et s'étendant dans le sens longitudinal de la cheville enfichable, et comportant des corps de blocage (5) qui sont disposés les uns derrière les autres dans le sens longitudinal de la cheville enfichable, qui sont mobiles dans le sens longitudinal de la cheville enfichable, et qui prennent appui par l'intermédiaire de surfaces obliques (4) ascendantes radialement par rapport à l'axe longitudinal dans le sens d'introduction de la cheville enfichable (1) sur la tige (2) de la cheville enfichable (1), moyennant quoi la tige et les corps de blocage sont reliés d'un seul tenant les uns aux autres, **caractérisée en ce que** les corps de blocage (5) sont reliés de manière mobile à la tige (2) de la cheville enfichable (1) à l'extrémité des corps de blocage orientée dans le sens circonférentiel de la cheville enfichable.

2. Cheville enfichable selon la revendication 1, **caractérisée en ce que** les corps de blocage (5) sont reliés à la tige (2) de la cheville enfichable (1) par des bandes de matériau (6) en forme de corde ou de ruban.

3. Cheville enfichable selon la revendication 1, **caractérisée en ce que** l'espacement des corps de blocage (5) les uns par rapport aux autres dans le sens longitudinal de la cheville enfichable (1) n'est pas plus grand que leur étendue dans le sens longitudinal de la cheville enfichable (1).

4. Cheville enfichable selon la revendication 3, **caractérisée en ce que** l'espacement des corps de blocage (5) les uns des autres dans le sens longitudinal de 1 cheville enfichable (1) est d'environ 0,5 à 0,6 fois leur étendue dans le sens longitudinal de la cheville enfichable (1).

5. Cheville enfichable selon la revendication 1, **caractérisée en ce que** les corps de blocage (5) présentent une surface extérieure cylindrique.

6. Cheville enfichable selon la revendication 1, **caractérisée en ce que** les surfaces obliques (4) par l'intermédiaire desquelles les corps de blocage (5) prennent appui sur la tige (2) de la cheville enfichable (1) sont bombées dans le sens transversal de la cheville enfichable (1).
